# EUROPEAN PATENT SPECIFICATION

(11) **EP 0 339 140 B1**
(45) Date of publication and mention of the grant of the patent: **29.09.1993**
(21) Application number: 88200801.4
(22) Date of filing: 26.04.1988
(51) Int. Cl.: G01F 1/66, A01D 41/12

(54) **Grain loss monitors for harvesting machines**
Körnerverlustmonitoren für Mähmaschinen
Appareils de surveillance de la perte de grains dans des moissonneuses

(43) Date of publication of application: 02.11.1989
(73) Proprietor: NEW HOLLAND BELGIUM N.V., B-8210 Zedelgem (BE)
(72) Inventor: Strubbe, Gilbert J. I., B-8021 Zedelgem (Loppem) (BE)
(74) Representative: Vandenbroucke, Alberic

(56) References cited:
- DE-A- 2 044 266
- DE-A- 2 632 507
- DE-A- 2 633 638
- GB-A- 2 002 903
- GB-A- 2 144 861
- US-A- 4 004 289
- US-A- 4 036 065

## Description

This invention relates to an apparatus for measuring grain loss in harvesting machines. More particularly, this apparatus may be used for measuring grain losses occurring at the discharge end of, on the one hand, the threshing and separating mechanism and/or, on the other hand, the cleaning apparatus of such harvesting machines. Lost grain is that grain which is lost by way of either being entrained in the straw which is discharged from the combine separating mechanism to the ground or by way of being discharged together with chaff and other impurities from the combine cleaning apparatus.

Throughout this specification the reference to "grain" is intended to refer to that part of the crop which is threshed and separated from the discardable part of the crop material which is referred to as "straw". In the following description terms such as "forward", "rearward", "left", "right" etc... are used which are words of convenience and which are not to be construed as limiting terms.

As appears from e.g. DE-A-2.632.507 and GB-A-2.002.903, grain loss monitors for harvesting machines are known in the art and these attempt to monitor the amount of grain which is lost by way of relying on impact detectors which "count" a fraction of the grain which is being discharged at the back of the machine. However, the operator is unable to determine the relative proportion between the fraction of grain which impacts upon the grain loss detector or detectors on the one hand and the total actual losses on the other hand. This gives rise to perhaps the most important problem associated with existing grain loss monitors to the extent that there is not available a monitor which will indicate, in absolute terms, the amount of grain being lost during the harvesting process. Known monitors have only been able to provide some indication which varies more-or-less proportionally with the variations in the magnitude of the actual grain losses.

However, the present invention does not address this particular problem but rather two further problems which equally are associated with known monitors such as shown in the aforementioned DE-A-2.632.507 and GB-A-2.002.903. The first one of these further problems consists of the relatively complicated operation of known grain loss monitors while that the other one is concerned with the lack of accuracy in the measurements in as much as known monitors are unable to distinguish adequately between grain and straw; the latter problem being particularly critical when the crop material is relatively wet.

Regarding the problem of complexity of known grain loss monitors, a plurality of controls require operation by the operator in order to set the monitor for any given circumstance.

For example, there is one control which has to be set according to the type of crop being harvested. This control sets the signal threshold value which must be lower for relatively small grain and which must be higher for relatively large grain. This setting further also is particularly critical in connection with the second problem as will be explained later.

Another control sets the sensitivity of the monitor and should take into account a.o. the condition of the crop material being harvested such as, e.g. whether this crop material is considered to be dry or moist. It may not always be easy to decide whether a crop is wet or dry, for example and, in any event, the conditions can change as the harvesting process progresses so that ideally the monitor settings should be adjusted accordingly.

A third control also has to be operated according to whether a detector being monitored is that associated with either the separating mechanism and/or the cleaning sieves of the harvesting machine.

The setting of these controls takes time and experience as, in practice, it requires a relatively complex procedure. In accordance with this procedure, the operator has to calibrate the monitor for each one of the settings of the third control, i.e. the control for selecting between the detectors associated with the separating mechanism and/or the cleaning sieves. As a first step in these calibrating procedures, the operator has to set the first control, i.e. the control of the signal threshold value in accordance with the type of crop material to be harvested. This control should be set sufficiently low so that impacts occasioned by grain kernels on the detector or detectors generate signals in the circuitry associated with these detector or detectors. This thus varies with the specific weight of the grain being harvested.

Next, the operator has to operate the harvester at a capacity rate which he expects to correspond to the grain loss rate which he considers to be just within the acceptable limits. He then sets the second control, i.e. the control for setting the monitor sensitivity so that an appropriate monitor "reading" is generated. Next, he physically checks the straw, chaff and other debris which is being discharged by the machine and he uses his practiced eye to decide whether or not the extent of grain loss that actually occurs is indeed at the rate he has chosen to be acceptable. If it is not, then a further test run is made at a different capacity rate which is expected to entrain the grain loss rate which is acceptable. The second control is reset to generate an appropriate monitor "reading" and the physical checking of the material issuing from the harvester is repeated. These steps are repeated until on the one hand, the maximum capacity rate for a given grain loss rate, which is considered still to be acceptable, is obtained and, on the other hand, the second control is set so as to generate a monitor "reading" which is adequate at this acceptable grain loss rate.

When the operator decides that the grain loss is at the acceptable rate, he then attempts to operate the machine so as to keep the grain loss monitor "reading" at the same value. If the operator does not use his practiced eye to effect this calibration of a known grain loss monitor, then grain loss can be relatively high even when the monitor might indicate otherwise. Also, the opposite may be true in as much as the grain loss monitor possibly could indicate that there is grain loss which, whilst being true, is at a level which is significantly less than is considered to be acceptable. This would unnecessarily curtail the harvester capacity. This calibration is particularly difficult because actual quantification of the grain loss rate by a mere physical control of the material discharged at the back of the harvester is not possible and this is why the practiced eye of the operator is required for the calibration. The complexity of this calibration is also the main reason why the controls of known monitors tend to be left alone by the operator with a result that known grain loss monitors are of little practical use.

Also, even if the controls are operated in a proper manner, the indicated grain loss still suffers from the problem of being inaccurate in that the or each detector cannot always adequately distinguish between impacts from straw as opposed to impacts from grain. This difficulty arises because the stems of a given crop have nodules or knobs along their length and very often stems will break at these nodules. This gives rise to pieces of straw having a nodule at one end. If such a piece of straw impacts a detector with the nodule leading, then it can give rise to a signal somewhat similar to that created by the impact of a grain kernel. Accordingly, the detector counts such impacting pieces of straw as grain kernels and will thus indicate a greater grain loss than is actually occurring with the result that the operator may change the operating conditions to reduce the grain loss to what he considers to be an acceptable level and which he may already be achieving. One operating condition which may be changed to this end is the forward speed of the machine which may be reduced and which thus increases the harvesting time with the attendant expense and yet often is unnecessary in as much as actual grain loss may be within the range which is acceptable to the operator.

Discrimination between impacts occasioned by grain kernels and pieces of straw may be obtained in known grain loss monitors by adjusting the first control, i.e. the control for setting the signal threshold value. Ideally, this control should be set so that the monitor records all grain kernel impacts on the one hand and eliminates all straw impacts on the other hand. However, it has been found that, in practice, a monitor "reading" quite often is generated in part by straw impacts and in part by grain kernel impacts. However, it is very difficult, if not totally impossible, for the operator to accurately assess what part of the monitor "reading" is generated by straw impacts and what other part of the monitor "reading" is generated by the grain kernel impacts.

This problem is even further aggravated by the fact that the point of discrimination between grain kernel impacts and straw impacts greatly fluctuates dependent on the crop conditions such as the moisture content of the crop material being harvested. Wet crop conditions require a lower threshold setting than dry crop conditions because of the relative softness of wet grain kernels and pieces of straw. A threshold setting which is acceptable for dry crop conditions, i.e. which adequately discriminates between dry grain kernels and dry pieces of straw may be too high for detecting impacts of wet grain kernels. Also, an acceptable setting for wet crop conditions may read impacts occasioned by pieces of dry straw as grain kernel impacts. As a consequence, it thus is also very difficult for the operator to decide on the threshold setting of the monitor.

The foregoing problems further also are complicated by the fact that, on the one hand, in dry crop conditions the straw is much more brittle. This results in much more pieces of straw with a nodule at one end being formed. Accordingly, in dry crop conditions, also a relatively higher proportion of the impacts received on the grain loss detectors are caused by pieces of straw. On the other hand, it also is much more difficult, in wet crop conditions, for grain kernels to be separated from the layer of straw which is discharged at the rear end of the harvester and thus, proportionally, a smaller number of grain kernels impact on the detectors in wet crop conditions even though the grain loss level may be high.

In view of the high cost of a harvesting operation, it is extremely important to maximize the capacity of a given harvesting machine, consistent with achieving a grain loss rate which does not exceed a set limit. Accordingly, it is the object of the present invention to provide a grain loss monitor which is simple to operate and which provides an indication of the magnitude of the actual grain losses occurring which is less distorted by impacts on the detector or detectors by material other than grain than is the case with monitors which are known to date.

According to the present invention there is provided a grain loss monitor for a harvesting machine which is operable to separate grain kernels from crop material debris; said grain loss monitor comprising :
detector means for detecting a loss of grain from the harvesting machine and including a sensor plate and transducer means operably associated therewith; said sensor plate being disposed for crop material containing grain kernels to impact thereon as it is being discharged from the harvesting machine and said transducer means being operable to convert physical vibrations of the sensor plate, caused by the impacts of said crop material thereon, into an electrical output signals; and
circuit means operable to process said electrical output signals in a manner to express an indication of the amount of grain loss from the harvesting machine, and
characterized in that :
the transducer means have a resonant frequency in the range of 8 to 25 kHz and the circuit means have a frequency domain tuned thereto; said resonant frequency range of the transducer means being selected for the dominance, in this range, of the electrical output signals generated by the impacts of the grain kernels in said crop material on the sensor plate over the electrical output signals generated by the impacts of the debris in this crop material on said sensor plate.

The resonant frequency of the transducer means preferably is in the range of 12 to 25 KHz, such as in the range of 15 KHz for example.

The selection of the resonant frequency range of the transducer means is the result of a very detailed investigation into the signals which are transmitted through a sensor plate when the latter is impacted by an article such as a piece of straw or grain. It has been found that a wave transmitted through a sensor plate as a result of an impact thereon has a high frequency wave front followed by a low frequency wave body; this wave body being determined by the modal behaviour of the sensor plate. The inventor turned his attention to this particular characteristic and investigated whether or not the high frequency wave front could be used to advantage in solving the present deficiencies of grain loss monitors. This investigative work involved a Fourier analysis of the wave forms of the signals induced in a detector plate by grain (both dry and wet) and straw (with nodules) impacts on said plate. It was discovered that the high frequency wave fronts of grain kernel impact signals and straw impact signals have different frequencies; the straw impact signals having lower frequency wave fronts than the grain kernel impact signals. Accordingly, it was then possible to determine a range of resonant frequencies to which the detector means and the associated circuity could be tuned and which resulted in the impacts by grain being "counted" to the general exclusion of the impacts by straw. In this respect, impacts by wet grain are "counted" as well as impacts by dry grain.

The transducer means comprise either a single transducer or a plurality of transducers which preferably are of the ceramic crystal transducer type. The selection of a ceramic crystal for the transducer gives rise to a number of advantages. This is because, in order to realise sufficient selectivity and, at the same time, have acceptable sensitivity, it is advantageous if the characteristic function of the detector contributes to the signal conditioning. A normal microphone has a flat frequency curve or response and a comparatively low signal output with a high impedance input. This characteristic is not selective enough, at least for the purposes of grain loss monitoring. Moreover, the construction of a normal microphone equally is not robust enough for use on a vibrating assembly such as a combine harvester.

However, the frequency characteristic of a ceramic crystal demonstrates a resonant frequency which is useful in the signal processing. A ceramic crystal behaves as a resonant circuit and amplifies the signal frequencies within its resonant zone. In contrast with vibration instrumentation, wherein the resonant zone of the pick-up is avoided for equal frequency sensitivity, the frequency characteristic of a ceramic crystal is used in a preferred embodiment of the present invention to realise a selective output. The crystal receives the impact signals, by way of physical vibrations, from the detector plate to which it is attached and converts it into electrical output signals in which the frequencies in the resonant zone of the crystal dominate. Accordingly, the use of a ceramic crystal transducer or transducers is particularly useful in realizing the basic inventive concept of selecting a resonant frequency of the detector in the range of 8 to 25 KHz.

The circuit means preferably also comprise a high pass filter to which the output of the transducer means is connected. Said high pass filter has a frequency domain which is tuned to the resonant frequency of the transducer means on the one hand and to the frequency range of the wave fronts of the signals induced in the transducer means by grain kernel impacts on the detector plate of the detector means on the other hand. This filter preferably is of at least the sixth order and has a steep gradient in the frequency range of 10 to 15 KHz.

A grain loss monitor in accordance with the present invention will now be described in greater detail, by way of example, with reference to the accompanying drawings, in which:
Figures 1 to 5 and Figure 8 are explanatory graphs useful in discussing the present invention.
Figure 6 is a diagram illustrating the detection rates, using the present invention, of various types of grain and straw; and
Figure 7 is a block diagram of a grain loss monitor in accordance with the present invention.

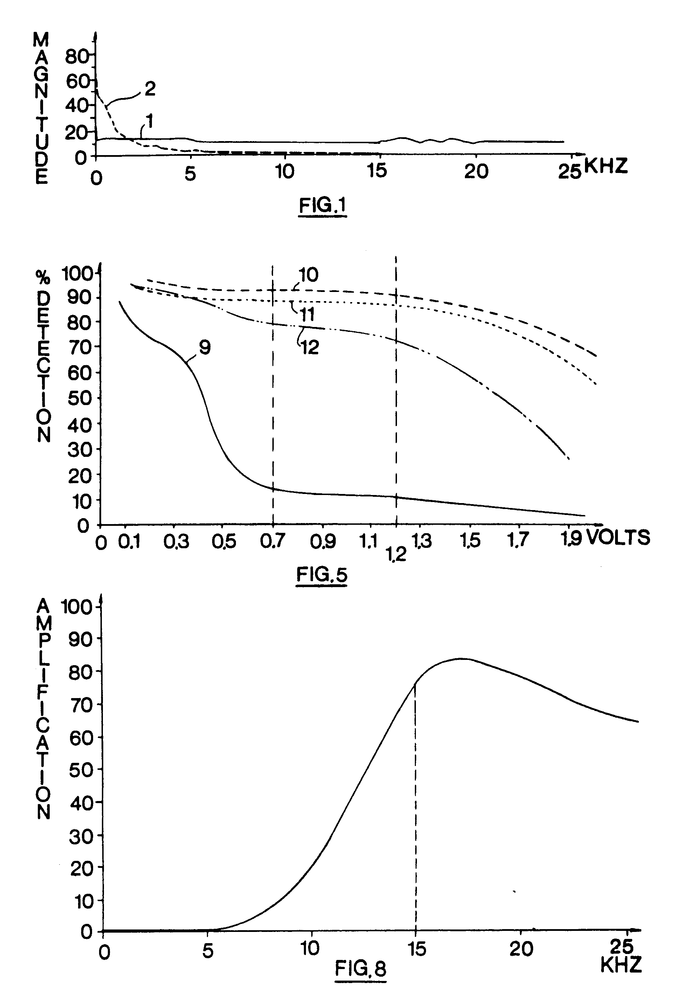

Turning now to Figure 1 of the drawings, this illustrates two curves obtained from a Fourier analysis of the signals induced in an impact detector by the impacts of a wheat kernel, respectively a piece of wheat straw with a nodule at one end when dropped from a predetermined height on said detector. Figure 1 shows a general magnitude scale on the ordinate axis and frequency in hertz along the abscissa axis. The full line curve 1 is that which is obtained by dropping a wheat kernel having an 11 % moisture content from a height of 10 cm above the detector plate having associated therewith a transducer or load cell having a wide and constant frequency range. The broken line curve 2 was obtained by dropping a wheat stem (straw) having a nodule at one end, with the nodule leading from the same height on the same detector arrangement. Curve 1 shows that the magnitude of the signal obtained by the impact of a wheat kernel is relatively constant up to at least 25 KHz. However, the signal generated by the straw is of relatively large magnitude initially up to about 5 KHz and then drops dramatically so that in the 15 KHz region, there is virtually no signal level.

The fact that the straw signal 2 greatly exceeds the grain kernel signal 1 in the low frequency range is no surprise in as much as the weight of the piece of straw with the nodule also greatly exceeds the weight of the grain kernel. These findings also indicate that a grain loss sensor tuned in the low frequency zone would mainly record straw impacts rather than grain impacts. This is not at all acceptable. If in contrast therewith the curves 1 and 2 are compared at the 15 KHz point, for example, it will be seen that the signal level of the straw impacts can be ignored as against the signal level of the wheat kernels which is of the order of magnitude 10. The absolute magnitude of the two signals is of no importance; the essential point being that the ratio of the grain kernel signal to the straw signal is high in a given frequency range whereby it is possible to take out the low level signals and hence concentrate on the high level signals.

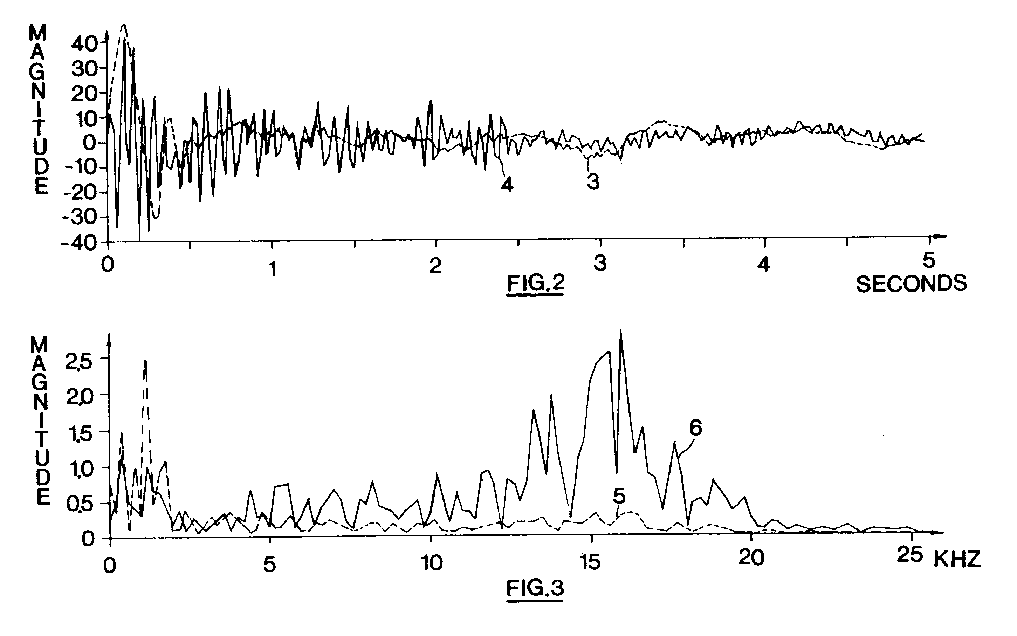

Turning now to Figure 2-4, these curves were obtained using a detector in the form of a plate having attached thereto a crystal detector having a resonant frequency in the range of 15 KHz. This thus is in contrast with the arrangement from which the signals of Figure 1 are derived, this arrangement having a detector with a load cell having a wide and constant frequency range. Figure 2 is a time domain graph with magnitude plotted against time in seconds. The broken line curve 3 resulted from the impact of straw and the full line curve 4 resulted from the impact of a wheat kernel on the detector. From a comparison of the curves 3 and 4 of Figure 2 it will be seen that no useful information can be derived therefrom for measuring grain losses in as much as both curves substantially overlap each other. However, Figure 2 nevertheless is useful in as much as it tends to confirm the findings that can be derived from Figure 1 and following which, on the one hand, a grain kernel impact generates a signal wherein the high frequency vibrations proportionally are relatively important and, on the other hand, a straw impact generates a signal wherein the low frequency vibrations proportionally also are relatively important.

Figure 3 shows a graph similar to Figure 1 in as much as a general magnitude scale on the ordinate axis and a frequency scale in hertz along the abscissa axis are shown. Again, the broken line curve 5 shows the straw impact signal while that the full line curve 6 illustrates the grain kernel impact signal. From these curves it will be seen that at around the 15 KHz point, there is a signal level in excess of 2,5 generated by the wheat kernel, whereas the straw generated signal level is of the order of 0,4. Therefore, the ratio of these signals at 15 KHz is significantly high. In other words, the signal amplitude of the grain kernel signal is high in the high frequency range while that in that same frequency range the amplitude of the straw signal is low. This graph also confirms that in the low frequency range the amplitude of the straw signal substantially exceeds the grain kernel signal.

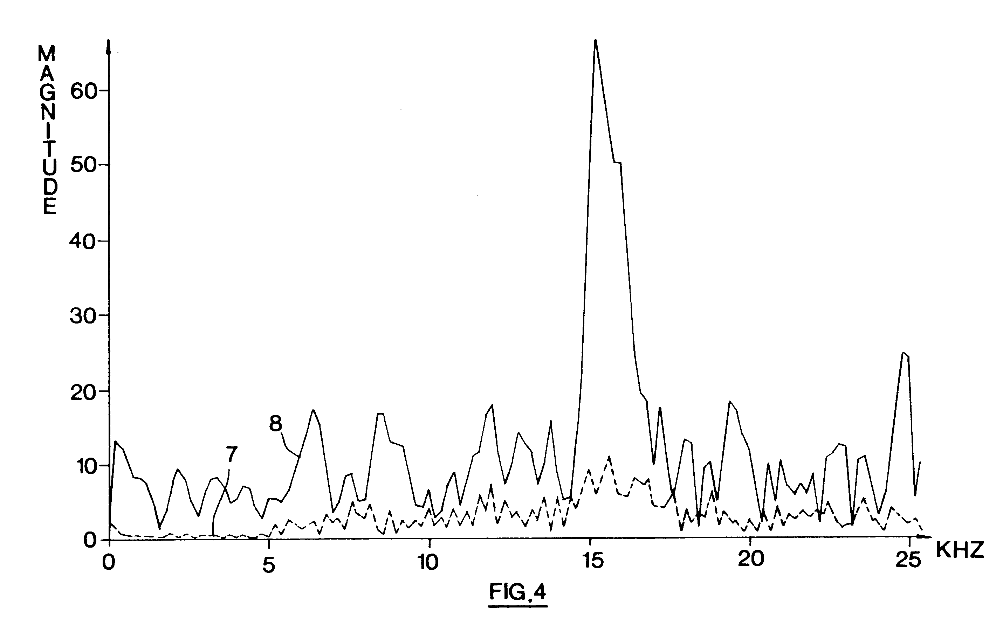

Figure 4 is very similar to Figure 3, except that it shows the results of a Fourier analysis on the signals of Figure 2 after they have been passed through a high pass filter, the characteristics of which are illustrated in Figure 8. Again, the broken line curve 7 illustrates the signal obtained from the impacting straw (nodule leading) and the solid line curve 8 shows the signal resulting from the impact of the wheat kernel. Figure 4 shows that the magnitude of the signal generated by the impacting wheat kernel peaks significantly at around 15 KHz and has a magnitude in excess of 60 whereas the signal generated by the impacting straw is of a more consistent level of magnitude. Thus, it will be seen that, at the 15 KHz point, the ratio of the magnitudes of the wheat kernel and straw signals is relatively high which is consistent with the curves of Figure 3.

The high pass filter used for filtering the signals preferably is of at least the sixth order so as to obtain a relatively steep gradient in the selected frequency range; this range being situated between 10 and 15 KHz in the arrangement of which the characteristics are illustrated in Figure 8. The graph of Figure 8 plots the amplification factor of the filter on the ordinate axis against the frequency levels on the abscissa axis and, as a matter of fact, Figure 4 may be considered as being the result of the multiplication of the signals of Figure 3 with the amplification factors illustrated in Figure 8.

It has been found that with the use of a high pass filter of the type as described above, mainly only the wave fronts of the grain kernel impact signals are considered in as much as these wave fronts have a high frequency whereby they pass through the filter and are amplified. In contrast therewith the remainder of the grain kernel impact signals have a lower frequency whereby they are filtered out. In as much as the straw impact signals altogether have a much lower frequency (even also the wave fronts thereof), these signals equally are filtered out to a substantial degree. In summary, the use of a high pass filter of the type as described has made it possible to look mainly at the wave fronts of the grain kernel impact signals while ignoring to a great extent the rest of these signals as well as the entire straw impact signals.

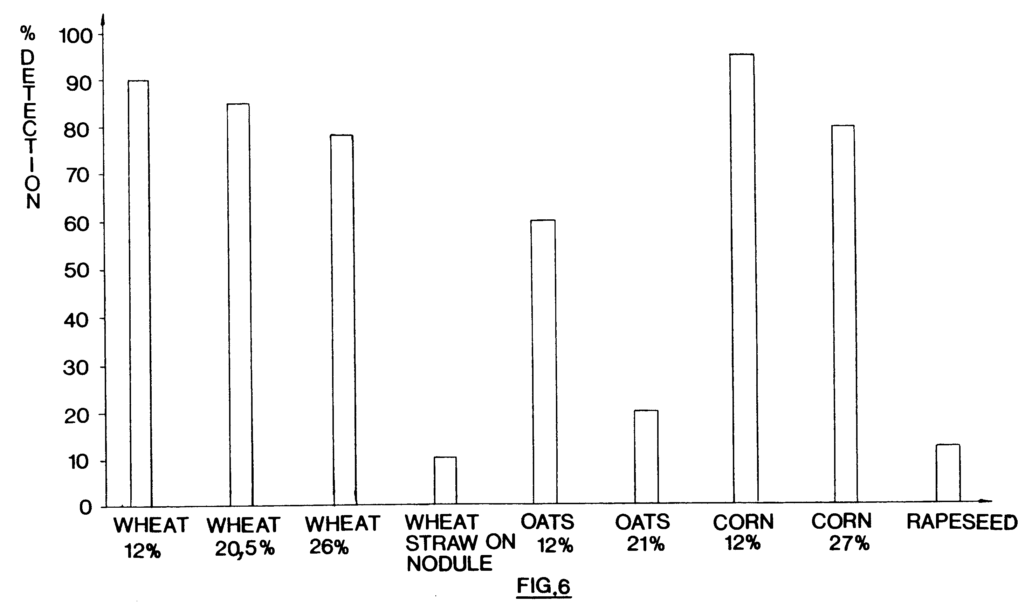

Turning now to Figure 5, this figure summarizes the results of one aspect of the study which has taken place and illustrated in its various aspects in Figures 1 to 4 of the drawings. More specifically it illustrates the ability to discriminate between grain and straw in a given condition. It shows the detection rate or percentage detection (ordinate axis) of impacts of wheat kernels and straw against threshold voltages (abscissa axis) with a grain loss monitor having an impact detector of the type including a crystal transducer with a resonant frequency of 15 KHz on the one hand and also having high pass filter of at least the sixth order on the other hand.

By percentage detection or detection rate is meant the proportion of signals recorded by the monitor when set at any given threshold voltage. As an example, an 80 % detection rate at a threshold voltage of 1 volt means that, with the monitor set at a threshold voltage of 1 volt, the monitor responds to and records 80 impacts out of a total number of 100 impacts that occurred on the impact detector. This also implies that 20 impacts thereof are ignored by the monitor. In other words, 80 impacts out of 100 impacts on the given impact detector are translated into signals of at least 1 volt.

For putting together the graph of Figure 5, the threshold voltage for the signals generated at the detector by impacting wheat kernels and straw was varied between 0,1 and 2 volts to establish whether threshold values per se would distinguish clearly grain signals from straw signals. Also, the length of the detector plate of the impact detector was varied to check the possible influence of this variable. Four curves are shown in Figure 5 which represent :
Curve 9 : The detection rate of the impacts by pieces of wheat straw dropped from a height of 100 mm on a detector plate with a length of 265 mm and using a single crystal transducer; said pieces of straw having nodules by which the pieces of straw impacted upon the detector plate.

Curve 10 : The detection rate of the impacts by wheat kernels dropped from a height of 100 mm on a detector plate with a length of 265 mm and using a single crystal transducer.

Curves 11 and 12 : The same as curve 10 except that the detector plate has a length of 850 mm, respectively 1400 mm.

Curve 9 shows that, for a low threshold value, the percentage detection of straw impacts is relatively high at about 75 %. This also indicates that with a monitor set at a low threshold value (below 0,5 volts) the monitor "reading" will very much be influenced by the amount of straw impacting upon the detector surface. This, of course, is not acceptable. However, the detection rate of straw impacts dramatically falls from a threshold voltage of 0,3 volts onwards and is less than 20 % with a threshold voltage set at 0,7 volts or higher. Considering the threshold voltage range between 0,7 volts and 1,2 volts, the detection rate of straw impacts appears to be relatively constant at about 12 % , which is considered to be acceptable.

From curve 10 it will be seen that the percentage detection of grain impacts with the same detector arrangement as for curve 9 is of the order of 95 % with threshold voltages in the range of 0,7 to 1,2 volts so that, if this threshold range is employed, the detection of grain will predominate.

From a comparison of the curves 10, 11 and 12 it also will be seen that the detection rate is substantially independent of the width of the detector plate in spite of only employing one transducer per impact detector. Indeed, whilst it is seen that the detection rate for the longest (widest) detector investigated (curve 12) is of the order of 80 % (as opposed to 95 % for the shortest detector) in the voltage threshold range of 0,7 to 1,2 volts, this is still significantly higher than the 12 % straw detection rate in the same voltage threshold range. This 80 % detection rate still gives an adequate result against the 12 % detection rate of straw in the same range.

The foregoing analysis thus tends to indicate that it must be possible to build a grain loss monitor which, for a given condition, discriminates up to a satisfactory level between grain and straw. To this end, it is necessary to provide a monitor including on the one hand an impact detector having a crystal detector with a resonant frequency in the range of 15 KHz and on the other hand a high pass filter which is tuned to this frequency domain. However, the monitor also should be able to discriminate between grain and straw in a wide range of conditions.

So far the influences of varying crops and crop conditions have not been considered. However, this now will be addressed hereafter with reference to Figure 6 which charts the percentage detection of different types of crop (grain) and straw. The detection point on the detector used to generate these charts was 150 mm to one side of the single crystal detector employed and which had a resonant frequency of the order of 15 KHz. The conditioning circuit employed was with a sixth order filter and set at a threshold of 1 volt. In other words, the threshold setting of the monitor did not change throughout the comparison test.

In this respect it should be noted that with grain loss monitors know to date it always has been necessary to adjust the threshold setting when switching from one crop or crop condition to a very different crop or crop condition. Indeed, when, e.g. the monitor was set for operation in wheat and oats were harvested, then, because of the differences in the crop characteristics (oats being very much softer than wheat) the monitor did not record any oats kernel impacts. Accordingly, this tended to indicate that there was no grain loss even though a substantial grain loss actually could occur. Similarly, if the monitor was set for operating in oats and if wheat was harvested, the monitor responded very much to wheat straw impacts in addition to the wheat kernel impacts. As a consequence the monitor threshold setting had to be adjusted in accordance with the crop being harvested.

Considering Figure 6 more closely it will be seen that the detection rates in four different crops, namely wheat, oats, corn and rape seed have been compared. This small range of crop may be considered to be representative of the wide variety of crops that may be harvested with combine harvesters. Furthermore, Figure 6 also compares the detection rates in different crop conditions.

Considering first the four columns on the left hand side of Figure 6, it will be noted that the humidity has only a minimal influence on the detection rate of wheat grain in as much as this detection rate is around 90 % for relatively dry wheat (12 % moisture content) and is still around 80 % for wet wheat (26 % moisture content). This compares very favourably with the roughly 12 % detection rate of dry wheat straw; the detection rate of humid wheat straw still being smaller. Apart from these findings, it should be remarked that a reduction of the grain detection rate associated with an increase in the moisture content does not come as a surprise in as much as an increased moisture content softens the grain kernels. However, the essential finding is that, even in the worst condition, there still is a wide gap between the detection rates of wheat kernels and straw without having to adjust the threshold value to the particular condition and whereby a reliable signal is obtained. As a matter of fact, wheat probably is one of the most difficult crops to accurately discriminate between the grain kernels and straw in as much as the physical characteristics of the nodules come rather close to the physical characteristics of wheat kernels, especially when humid wheat kernels are compared with dry nodules.

Considering next the two columns representing the detection rates of oats kernels, it will be remarked that, without adjustment of the threshold value of the monitor, this detection rate is still around 60 % for dry oats (12 % moisture content) and drops to about 20 % for wet oats (21 % moisture content). This is considered to be a remarkable accomplishment even though these detection rates are substantially lower than the detection rates for wheat in as much as known monitors had a zero detection rate of oats kernels if the threshold value was not readjusted to the type of the crop. Furthermore, and although the detection rate of oats straw has not been shown in Figure 6, it should be remarked that, because of its physical characteristics, oats straw is not detected with the monitor setting as described above. Accordingly, there is absolutely no problem with the discrimination between oats kernels and oats straw. The foregoing findings also indicate that, on the one hand, the threshold adjustment can be dispensed with when switching from wheat to oats and, on the other hand, the drop in grain kernel detection rates when switching from wheat to oats can be compensated by adjusting the sensitivity setting of the monitor. Also, the substantial drop in the detection rates when switching from dry oats to wet oats can be compensated in this manner; the essential point being that no threshold adjustment is necessary.

Turning now to the columns indicating the detection rates of dry and wet corn (12 % respectively 27 % moisture content), these detection rates are found always to be situated above 80 %. Corn stalks and corn trash such as pieces of corn cobs are not detected with the monitor according to the invention and set as described above.

Turning now finally to the column indicating the detection of rapeseed, it is quite remarkable and surprising that, without any threshold adjustment, the monitor still has a detection rate of about 15 % of the relatively small rapeseed kernels.

In summary, the exercise as described above has indicated that the grain loss monitor according to the invention and as described above, i.e. a grain loss monitor including a high pass filter and an impact detector having a detector plate with a crystal transducer with a resonant frequency in the range of 15 KHz associated therewith, will adequately distinguish between grain and straw impacts in a wide variety of crops and crop conditions without having to adjust the threshold value to these crops and crop conditions; the only adjustment still being necessary being the sensitivity adjustment. This sensitivity adjustment still necessitates a calibration of the monitor involving a physical checking of the actual losses at the rear of the harvester. To this end, the monitor is provided with a single control means and this has greatly simplified the setting procedure.

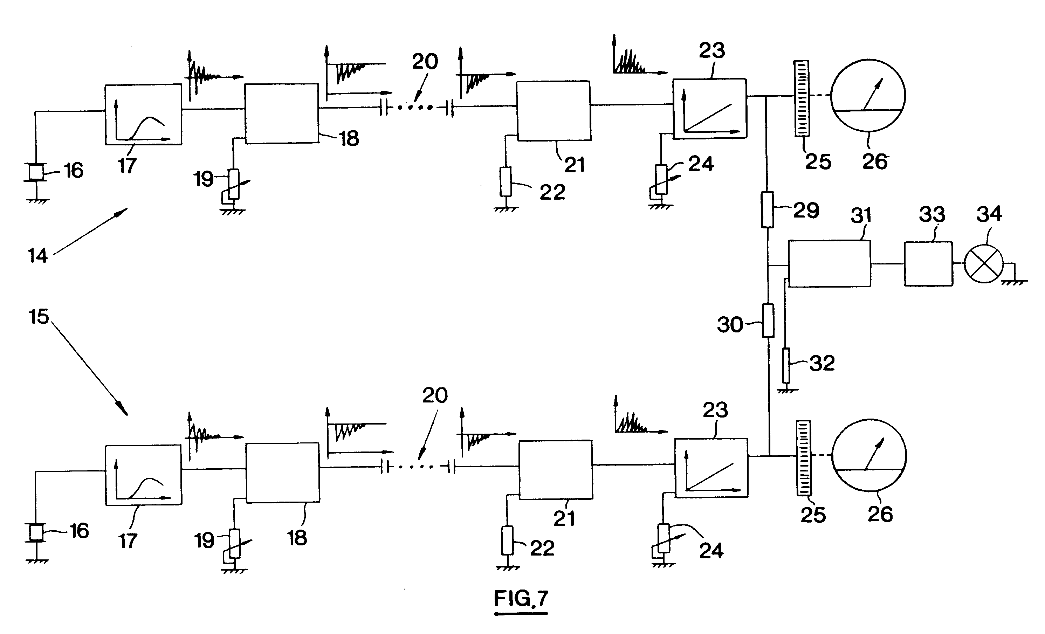

Turning now to Figure 7 of the drawings, this shows a block circuit diagram of a grain loss monitor constructed in accordance with the present invention. The circuit comprises two channels 14 and 15, one being for a detector or detectors situated at the discharge end of the separating mechanism (not shown) and the other for a detector or detectors located at the discharge end of the upper sieve of the cleaning mechanism (again not shown) of a combine harvester. The detectors are situated so that a fraction of the grain entrained with the straw, chaff and other debris discharged at the rear of the machine and which is separated from said straw, chaff and other debris, is caused to impact on said detectors. In case of a conventional combine harvester, the detector or detectors associated with the separating mechanism usually are mounted on one or more straw walkers at positions adjacent to and rearward of and slightly below the discharge ends thereof. In case of rotary combine harvesters which do not employ straw walkers, the detector or detectors preferably are positioned beneath the rear end portion or end portions of the separating concaves.

The detectors used in the channels 14 and 15 are not illustrated in the drawings but may be in the form of stainless steel plates to which crystal transducers are connected and such as disclosed in EP-A-0.339.142 of even date and entitled : "Impact Detectors". This co-pending application is incorporated herein by reference.

Each detector plate has associated therewith a single ceramic crystal transducer 16 having a resonant frequency in the range of 8 to 25 KHz. Preferably this resonant frequency is in the range of 12 to 25 KHz. Very good results have been obtained with a crystal having a resonant frequency of about 15 KHz. Even better results have been obtained with an impact detector having twin ceramic crystal transducers provided in a single transducer housing associated with the detector plate. In this twin transducer arrangement, the crystal transducers had a resonant frequency of 11,6 KHz, respectively 19,5 KHz. In other words, the respective resonant frequencies were situated at the opposite ends of the selected range.

The output of the crystal 16 for each of the channels 14 and 15 is applied to high pass filter 17 and the output of the latter is applied to a first comparator 18 with which is associated a variable threshold device 19. The output of the first comparator 18 is applied to a second comparator 21 having a fixed threshold device 22 associated therewith and which is provided to eliminate any noise on the relatively long lead 20 which connects the comparator 18 with the comparator 21, the former being physically located on the detector plate and the latter being located in the cab of the combine harvester (not shown). The output of the comparator 21 is applied to an integrator 23 which has an adjustable gain control 24 associated therewith. The output of the integrator 23 is applied either to a bank of light emitting diodes (LED's) 25 and/or a meter 26. The amplitude level of the signal at the output of the integrator 23 dictates how many of the LED's 25 are illuminated or energised, thus giving an indication of the grain loss which is being monitored. Similarly, the extent of movement of the needle of the meter 26, when employed provides a similar indication.

The high pass filter 17 in each of the channels 14 and 15 is tuned to the crystal transducer 16 to which it is associated and is of the type having a relatively steep gradient between 10 and 15 KHz. In order to achieve these characteristics, preferably a filter of at least the sixth order is employed. The characteristic curve of this high pass filter is shown in Figure 8 and it will be seen that, below the 5 KHz a signal is not amplified. In contrast therewith an amplification factor in the range of 70 to 80 is applied to signals in the range above 15 KHz.

It would also be possible to use a band pass filter tuned to the resonant frequency of the crystal transducer 16. However, it is not always easy to ensure that the correct band pass is obtained and this is why a high pass filter as described is preferred.

The use of the high pass filter 17 has made it possible to basically look at the wave fronts of the grain kernel impact signals only which have a frequency which is higher than the frequencies of as well the rest of the grain kernel impact signals as the entire straw impact signals and which thus basically are ignored. This is an important reason why the monitor according to the invention is able to adequately discriminate between grain and straw without having to reset the monitor each time the crop and crop conditions vary.

It should also be noted that the adjustable threshold device 19 for the comparator 18 is set at the factory on manufacture and may be dispensed with. The only control of the grain loss monitor which has to be effected by the operator is that of the gain control 23 which is necessary in order to obtain a signal of a sufficient level (sensitivity) to drive the LED's 25 or the meter 26 for all the crops and crop conditions.

While that the threshold device 22 associated with the second comparator 21 has been shown and described as being fixed, this threshold device 22 nevertheless also may be made adjustable to permit a setting for eliminating all of the noise on the lead 20 which may be different from one machine to another. However, this type of adjustment is not normally done by the operator. Instead it may be done by the manufacturer and/or the dealer. Anyway, this type of adjustment has nothing to do with the adaptation of the monitor to the crop and condition of the crop being harvested.

The fact that each crystal 16 and the processing circuitry associated therewith, especially the high pass filter 17, are tuned to a frequency in the range of 8 to 25 KHz (preferably 12 to 25 KHz, ideally 15 KHz) means that essentially only the impacts by grain on the or each detector are sensed and impacts by straw (even with leading nodules) are ignored systematically, without the operator having to adjust the threshold value of the monitor to adapt the monitor to the crop and crop condition. Thus, the grain loss monitor constructed in accordance with the present invention is far more accurate than known monitors and represents a very significant advance in the art.

To appreciate the importance of the progress in the art provided by the invention, it may be useful to consider the following comparison which has been made between the monitor according to the invention on the one hand and various grain loss monitors available on the market on the other hand. The setting of the several monitors has not been readjusted during the entire comparison.

| | Invention | A | B | C | D |
|---|---|---|---|---|---|
| resonant freq. of transducer | 15 KHz | 2,5 KHz | 6 KHz | 6 KHz | higher than 100 KH^{z} |
| Conditioning circuit | High pass 6th order | Conventional amplifier | Low pass 1st order | Low pass 3rd order | High pass 4th order |
| Conditioning circuit | 16 KHz | higher than 25 KHz | 1,5 KHz | 0,5 KHz | 25 KHz |
| [1] detection rate wheat at 12 % moisture | 90 % | 70 % | 65 % | 95 % | 60 % |
| [2] detection rate wheat straw nodule leading at 12 % moisture | 12 % | 88 % | 80 % | 40 % | 40 % |
| [3] detection rate wheat at 26 % moisture | 78 % | 63 % | 57 % | 84 % | 30 % |
| ratio [1]/[2] | 7,5 | 0,8 | 0,8 | 2,4 | 1,5 |
| ratio [3]/[2] | 6,5 | 0,71 | 0,71 | 2,1 | 0,75 |

It will be remarked from the foregoing comparison that most prior art grain loss monitors have a detector transducer with a low resonant frequency while that one prior art grain loss monitor has a detector transducer with a resonant frequency of more than 100 KHz. In any event, none of the prior art monitors has a detector transducer and a conditioning circuitry which are tuned to each other.

It also will be seen from the above comparison that only the monitor according to the invention is capable of adequately to distinguish between dry grain and straw impact signals; the ratio of the detection rates of grain-to-straw in the given circumstances being in the range of 7,5. The prior art arrangement which comes closest to this ratio is the grain loss monitor C with a ratio in the range of 2,4 only. Several prior art grain loss monitors even have a grain-to-straw detection ratio of less than 1, which obviously is not at all acceptable.

The foregoing comparison further also indicates that also in wet crop conditions, the grain loss monitor according to the present invention is the only monitor capable adequately to distinguish between grain kernel and straw impacts; the ratio of the detection rates of grain-to-straw in the given circumstances still being in the range of 6,5 while that for the other grain loss monitors these ratios are situated around 0,7-0,8 (three times) and 2,1 (once). I should be kept in mind that these comparisons indeed have been made without any resetting of the monitors. This thus implies that with the monitor according to the invention there is no need to readjust the setting when the crop conditions vary from dry to wet.

Considering the findings with monitor D, i.e. the only monitor with a crystal detector having a resonant frequency of over 100 KHz, it will be noticed that the grain detection rate very substantially drops when the grain condition changes from dry to wet. In other words, the monitor D is very sensitive for variations in the humidity content of the grain kernels. It has indeed been found that wet wheat kernels produce signals which peak at a lower frequency level than dry wheat kernels. This may be one of the reasons for the substantial drop in the detection rates of the monitor D. It also has been found that the resonant frequency of the crystal detector and the frequency of the conditioning circuit associated therewith should not exceed 25 KHz to avoid the afore described problem of wet wheat kernel impacts not being detected adequately.

The foregoing comparison also indicates that the detection rates per se are not very important as such in as much as when low detection rates are obtained, an adequate signal nevertheless still can be derived therefrom by varying the sensitivity setting which, as already said, is the only adjustment possibility which has been maintained. The more important aspect is that the ratio of grain-to-straw impacts is high and remains high in all conditions. It thus can be stated in general that, with its ratio of detection rates of grain-to-straw well in excess of 4 under most or all circumstances, the monitor according to the invention constitutes a substantial progress in the art.

The present invention also represents an advance in the art in terms of the ease of control which the operator has to exercise in using the grain loss monitor. This is because he no longer has to make any judgement as between the type of crop being harvested and the moisture content thereof. All he needs to control is the gain at the output of the system in order to obtain a sensible level of signal which is truly indicative of the grain losses actually occurring at the rear of the machine. Also, the need to employ only a single transducer irrespective of the width (length) of the detector plate reduces manufacturing costs.

Reference has been made to the provision of two channels for the grain loss monitor but it will be appreciated that eventually only one channel may be employed, e.g. in association with the harvester separating mechanism, if the operator so desires. It further also will be appreciated that alternatively, further channels also can be employed if more than two detection points are required.

On the basis of two channels, however, the output of the respective integrators 23 are averaged using two resistors 29 and 30, with the averaged signals being applied to a third comparator 31 having a fixed threshold device 32 associated therewith. The comparator 31 compares the averaged signals from the integrators 23 with the fixed threshold to see whether it is greater or less than the latter. If an averaged signal is greater than the threshold, then the comparator 31 produces an output signal which is fed to an amplifier 33 and thence to an alarm device which may be in the form of one or more lamps 34 and/or an audio alarm (not shown). With this arrangement, the operator is warned whenever the grain loss signal from one or both of the channels 14 and 15 is relatively high. The threshold for the comparator 31 is set such that, if the signal from one channel is relatively high and the other relatively low, the alarm will be operated. Also, if the signals from both channels are such that they are within an essentially acceptable range, the alarm is still energised because the average is still considered high even though each signal per se is considered acceptable.

While the preferred structure, in which the principles of the present invention have been incorporated, is described above and is shown in the accompanying drawings, it is to be understood that the invention is not to be limited to the particular details as described above and shown in said drawings, but that, in fact, widely different means may be employed in the practice of the broader aspects of the invention.

The present invention may be employed to advantage in the grain loss measurement system of EP-A-0.339.141 of even date and entitled : "Method and Apparatus for Measuring Grain Loss in Harvesting Machines".

## Claims

1. A grain loss monitor for a harvesting machine which is operable to separate grain kernels from crop material debris; said grain loss monitor comprising :
detector means for detecting a loss of grain from the harvesting machine and including a sensor plate and transducer means (16) operably associated therewith; said sensor plate being disposed for crop material containing grain kernels to impact thereon as it is being discharged from the harvesting machine and said transducer means (16) being operable to convert physical vibrations of the sensor plate, caused by the impacts of said crop material thereon, into an electrical output signals; and
circuit means (17 - 34) operable to process said electrical output signals in a manner to express an indication of the amount of grain loss from the harvesting machine, and
characterized in that :
the transducer means (16) have a resonant frequency in the range of 8 to 25 kHz and the circuit means (17-34) have a frequency domain tuned thereto; said resonant frequency range of the transducer means (16) being selected for the dominance, in this range, of the electrical output signals generated by the impacts of the grain kernels in said crop material on the sensor plate over the electrical output signals generated by the impacts of the debris in this crop material on said sensor plate.

2. A monitor according to claim 1, characterized in that the resonant frequency of the transducer means (16) is in the range of 12 to 25 KHz.

3. A monitor according to claim 2, characterized in that the transducer means (16) has a resonant frequency of about 15 KHz.

4. A monitor according to any of the preceding claims, characterized in that the transducer means (16) is in the form of a single ceramic crystal transducer.

5. A monitor according to claim 1 or 2, characterized in that the transducer means (16) is in the form of a pair of ceramic crystal transducers provided in series in a single transducer housing; said transducers having resonant frequencies which are situated generally at or adjacent the opposite ends of the selected frequency range.

6. A monitor according to any of the preceding claims, characterized in that the circuit means (17-34) comprises a high pass filter (17) to which the output of the transducer means (16) is connected.

7. A monitor according to claim 6, characterized in that the high pass filter (17) is of at least the sixth order.

8. A monitor according to claim 6 or 7, characterized in that the high pass filter (17) has a steep gradient in the frequency range of 10 to 15 KHz.

9. A monitor according to any of the claims 6 to 8, characterized in that the high pass filter (17) is tuned to the frequency range of the wave fronts of the signals induced in the transducer means (16) by grain kernel impacts on the sensor plate of the detector means.

10. A monitor according to any of the claims 6 to 9, characterized in that the circuit means (17-34) comprise :
- a comparator (18) having a threshold device (19) associated therewith; said comparator (18) being connected to the transducer means (16) via the high pass filter (17) to receive the output therefrom; and
- an integrator (23) provided with an adjustable gain control device (24); the output of the integration (23) being applied to indicator means (25; 26).

11. A monitor according to claim 10, characterized in that the threshold device (19) associated with the comparator (18) is adjustable.

12. A monitor according to claim 10 or 11, characterized in that :
- the high pass filter (17) together with the comparator (18) and the threshold device (19) associated therewith form a signal conditioning circuit; said signal conditioning circuit being provided in the immediate vicinity of the transducer means (16); and
- the circuit means (17-34) also comprise a further comparator (21) to which the integrator (23) is coupled and which also has a threshold device (22) associated therewith; said further comparator (21) and associated threshold device (22), said integrator (23), said gain control device (24) and said indicator means (25; 26) together forming an indicator circuit which is provided at a remote location from the signal conditioning circuit and which is coupled thereto by a long lead (20) to receive the signals therefrom.

13. A monitor according to any of the claims 10 to 12, characterized in that the indicator means (25; 26) comprise a bank of light emitting diodes (25); the number of diodes (25) energized by the output of the integrator (23) being adjustable by the adjustable gain control device (24) associated with the integrator (23).

14. A monitor according to any of the claims 10 to 13, characterized in that the indicator means (25, 26) comprise a meter (26), the needle of which is energized by the output of the integrator (23) and the position of said needle being adjustable by the adjustable gain control device (24) associated with the integrator (23).

15. A monitor according to any of the claims 10 to 14, characterized in that the adjustable gain control device (24) associated with the integrator (23) is the only control to be operated by the operator for setting the monitor.

16. A monitor according to any of the preceding claims, characterized in that the ratio of the grain kernel impact detection rate to the straw impact detection rate is in excess of 4.

17. A monitor according to any of the preceding claims, characterized in that it comprises a plurality of channels (14, 15); each channel (14, 15) having a said detector means and a said circuit means (17-34).

18. A monitor according to claim 17 when appended directly or indirectly to claim 12, characterized in that :
- two channels (14, 15) are provided; the output signals from the respective integrators (23) of these two channels (14, 15) being averaged and the averaged signals being applied to a third comparator (31) having a threshold device (32) associated therewith; and
- alarm means (34) are provided which are energized whenever the output signal from the third comparator (31) exceeds the threshold set by the threshold device (32).

## Patentansprüche

1. Körnerverlust-Überwachungsvorrichtung für eine Erntemaschine, die zur Trennung von Körnern von Erntematerialabfällen betreibbar ist, wobei die Körnerverlust-Uberwachungsvorrichtung folgende Teile umfaßt:
Detektoreinrichtungen zur Feststellung eines Körnerverlustes von der Erntemaschine, mit einer Meßfühlerplatte und mit dieser betriebsmäßig verbundenen Wandlereinrichtungen (16), wobei die Meßfühlerplatte so angeordnet ist, daß Körner enthaltendes Erntematerial bei seinem Auswurf aus der Erntemaschine auf die Meßfühlerplatte auftrifft, und wobei die Wandlereinrichtungen (16) zur Umwandlung von physikalischen Schwingungen der Meßfühlerplatte, die durch den Aufprall des Erntematerials auf diese hervorgerufen werden, in elektrische Ausgangssignale betreibbar sind, und
Schaltungseinrichtungen (17 - 34), die zur Verarbeitung der elektrischen Ausgangssignale in einer derartigen Weise betreibbar ist, daß eine Anzeige der Größe des Körnerverlustes von der Erntemaschine erzeugt wird,
dadurch gekennzeichnet, daß
die Wandlereinrichtungen (16) eine Resonanzfrequenz im Bereich von 8 bis 25 kHz aufweisen und die Schaltungseinrichtungen (17 - 34) einen hierauf abgestimmten Frequenzbereich aufweisen, wobei der Resonanzfrequenzbereich der Wandlereinrichtungen so ausgewählt ist, daß in diesem Bereich die elektrischen Ausgangssignale, die durch den Aufprall der Körner in dem Erntematerial auf die Meßfühlerplatte erzeugt werden, gegenüber den elektrischen Ausgangssignalen überwiegen, die durch den Aufprall des Abfalls in diesem Erntematerial auf die Meßfühlerplatte erzeugt werden.

2. Überwachungsvorrichtung nach Anspruch 1,
dadurch gekennzeichnet, daß die Resonanzfrequenz der Wandlereinrichtung (16) im Bereich von 12 bis 25 kHz liegt.

3. Überwachungsvorrichtung nach Anspruch 2,
dadurch gekennzeichnet, daß die Wandlereinrichtung (16) eine Resonanzfrequenz von ungefähr 15 kHz aufweist.

4. Überwachungsvorrichtung nach einem der vorhergehenden Ansprüche, dadurch gekennzeichnet, daß die Wandlereinrichtung (16) die Form eines einzigen Keramikkristallwandlers aufweist.

5. Überwachungsvorrichtung nach Anspruch 1 oder 2,
dadurch gekennzeichnet, daß die Wandlereinrichtung (16) die Form von zwei Keramikkristallwandlern aufweist, die in Serie in einem einzigen Wandlergehäuse angeordnet sind, wobei die Wandler Resonanzfrequenzen aufweisen, die allgemein an oder benachbart zu den entgegengesetzten Enden des ausgewählten Frequenzbereiches liegen.

6. Überwachungsvorrichtung nach einem der vorhergehenden Ansprüche, dadurch gekennzeichnet, daß die Schaltungseinrichtung (17 - 34) ein Hochpaßfilter (17) umfaßt, mit dem der Ausgang der Wandlereinrichtung (16) verbunden ist.

7. Überwachungsvorrichtung nach Anspruch 6,
dadurch gekennzeichnet, daß das Hochpaßfilter (17) zumindestens von sechster Ordnung ist.

8. Überwachungsvorrichtung nach Anspruch 6 oder 7,
dadurch gekennzeichnet, daß das Hochpaßfilter (17) einen steilen Gradienten im Frequenzbereich von 10 bis 15 kHz aufweist.

9. Überwachungsvorrichtung nach einem der Ansprüche 6 bis 8,
dadurch gekennzeichnet, daß das Hochpaßfilter (17) auf den Frequenzbereich der Wellenfronten der Signale abgestimmt ist, die in der Wandlereinrichtung (16) durch den Aufprall von Getreidekörnern auf die Meßfühlerplatte der Detektoreinrichtung hervorgerufen werden.

10. Überwachungsvorrichtung nach einem der Ansprüche 6 bis 9, dadurch gekennzeichnet, daß die Schaltungseinrichtungen (17 - 34) folgende Teile umfassen:
- einen Vergleicher (18) mit einer zugeordneten Schwellenwerteinrichtung (19), wobei der Vergleicher (18) mit der Wandlereinrichtung (16) über das Hochpaßfilter (17) verbunden ist, um dessen Ausgangssignal zu empfangen, und
- einen Integrator (23), der mit einer einstellbaren Verstärkungssteuereinrichtung (24) versehen ist, wobei der Ausgang des Integrators (23) den Anzeigeeinrichtungen (25; 26) zugeführt wird.

11. Überwachungsvorrichtung nach Anspruch 10,
dadurch gekennzeichnet, daß die dem Vergleicher (18) zugeordnete Schwellenwerteinrichtung (19) einstellbar ist.

12. Überwachungsvorrichtung nach Anspruch 10 oder 11,
dadurch gekennzeichnet, daß
- das Hochpaßfilter (17) zusammen mit dem Vergleicher (18) und der diesem zugeordneten Schwellenwerteinrichtung (19) eine Signalaufbereitungsschaltung bilden, wobei die Signalaufbereitungsschaltung in der unmittelbaren Nähe der Wandlereinrichtung (16) angeordnet ist, und
- die Schaltungseinrichtungen (17 - 34) ebenfalls einen weiteren Vergleicher (21) umfassen, mit dem der Integrator (23) gekoppelt ist und der ebenfalls eine ihm zugeordnete Schwellenwerteinrichtung (22) aufweist, wobei der weitere Vergleicher (21) und die zugehörige Schwellenwerteinrichtung (22), der Integrator (23), die Verstärkungssteuereinrichtung (24) und die Anzeigeeinrichtungen (25; 26) zusammen eine Anzeigeschaltung bilden, die an einer von der Signalaufbereitungsschaltung entfernten Stelle angeordnet und mit dieser über eine lange Leitung (20) zum Empfang der Signale von dieser gekoppelt ist.

13. Überwachungsvorrichtung nach einem der Ansprüche 10 bis 12,
dadurch gekennzeichnet, daß die Anzeigeeinrichtungen (25; 26) eine Gruppe von Leuchtdioden (25) umfassen, wobei die Anzahl der durch den Ausgang des Integrators (23) angesteuerten Leuchtdioden (25) durch die einstellbare Verstärkungssteuereinrichtung (24) einstellbar ist, die mit dem Integrator (23) verbunden ist.

14. Überwachungsvorrichtung nach einem der Ansprüche 10 bis 13,
dadurch gekennzeichnet, daß die Anzeigeeinrichtungen (25, 26) ein Meßinstrument (26) umfassen, dessen Zeiger durch den Ausgang des Integrators (23) angesteuert ist, wobei die Position des Zeigers durch die einstellbare Verstärkungssteuereinrichtung (24) einstellbar ist, die mit dem Integrator (23) verbunden ist.

15. Überwachungsvorrichtung nach einem der Ansprüche 10 bis 14,
dadurch gekennzeichnet, daß die mit dem Integrator (23) verbundene einstellbare Verstärkungssteuereinrichtung (24) die einzige von dem Betreiber zur Einstellung der Überwachungsvorrichtung zu betätigende Steuereinrichtung ist.

16. Überwachungsvorrichtung nach einem der vorhergehenden Ansprüche, dadurch gekennzeichnet, daß das Verhältnis der Getreidekörner-Aufprallerkennungsrate zur Stroh-Aufprallerkennungsrate größer als 4 ist.

17. Überwachungsvorrichtung nach einem der vorhergehenden Ansprüche, dadurch gekennzeichnet, daß sie eine Mehrzahl von Kanälen (14, 15) aufweist, wobei jeder Kanal (14, 15) eine Detektoreinrichtung und eine Schaltungseinrichtung (17 - 34) aufweist.

18. Überwachungsvorrichtung nach Anspruch 17 unter direkter oder indirekter Rückbeziehung auf Anspruch 12,
dadurch gekennzeichnet, daß:
- zwei Kanäle (14, 15) vorgesehen sind, wobei die Ausgangssignale von den jeweiligen Integratoren (23) dieser beiden Kanäle (14, 15) gemittelt werden und die gemittelten Signale einem dritten Vergleicher (31) zugeführt werden, mit dem eine Schwellenwerteinrichtung (32) verbunden ist, und
- Alarmeinrichtungen (34) vorgesehen sind, die jedesmal dann angesteuert werden, wenn das Ausgangssignal von dem dritten Vergleicher (31) den durch die Schwellenwerteinrichtung (32) festgelegten Schwellenwert überschreitet.

## Revendications

1. Appareil de surveillance de perte de grain pour une moissonneuse apte à fonctionner pour séparer des grains de céréales de débris de produits de récolte; ledit appareil de surveillance de perte de grain comportant :
des moyens détecteurs destinés à détecter une perte de grain hors de la moissonneuse et qui comprennent une plaque détectrice et des moyens transducteurs (16) associés d'une manière fonctionnelle à celle-ci; ladite plaque détectrice étant disposée pour que des produits de récolte contenant des grains de céréales se heurtent contre elle pendant qu'ils sont déchargés de la moissonneuse, et lesdits moyens transducteurs (16) étant aptes à agir pour convertir des vibrations physiques de la plaque détectrice, dues aux impacts desdits produits de récolte sur celle-ci, en signaux de sortie électriques ; et
des moyens formant circuits (17-34) aptes à agir pour traiter lesdits signaux de sortie électriques de manière à exprimer une indication de la quantité de grain perdu hors de la moissonneuse; et
caractérisé en ce que :
les moyens transducteurs (16) possèdent une fréquence de résonance dans la plage de 8 à 25 kHz et les moyens formant circuits (17-34) ont un domaine de fréquences en accord avec celle-ci; ladite plage de fréquences de résonance des moyens transducteurs (16) étant sélectionnée pour permettre la dominance, dans cette plage, des signaux de sortie électriques générés par les impacts des grains de céréales contenus dans lesdits produits de récolte sur la plaque détectrice, par rapport aux signaux de sortie électriques générés par les impacts des débris présents dans ces produits de récolte sur ladite plaque détectrice.

2. Appareil de surveillance selon la revendication 1, caractérisé en ce que la fréquence de résonance des moyens transducteurs (16) se situe dans la plage de 12 à 25 kHz.

3. Appareil de surveillance selon la revendication 2, caractérisé en ce que les moyens transducteurs (16) ont une fréquence de résonance d'environ 15 kHz.

4. Appareil de surveillance selon l'une quelconque des revendications précédentes, caractérisé en ce que les moyens transducteurs (16) se présentent sous la forme d'un seul transducteur à cristal de matière céramique.

5. Appareil de surveillance selon la revendication 1 ou 2, caractérisé en ce que les moyens transducteurs (16) se présentent sous la forme de deux transducteurs à cristal de matière céramique disposés en série dans un boîtier de transducteurs unique; lesdits transducteurs ayant des fréquences de résonance situées, d'une manière générale, au niveau ou à proximité des extrémités opposées de la plage de fréquences sélectionnée.

6. Appareil de surveillance selon l'une quelconque des revendications précédentes, caractérisé en ce que les moyens formant circuits (17-34) comportent un filtre passe-haut (17) auquel est reliée la sortie des moyens transducteurs (16).

7. Appareil de surveillance selon la revendication 6, caractérisé en ce que le filtre passe-haut (17) est du sixième ordre au moins.

8. Appareil de surveillance selon la revendication 6 ou 7, caractérisé en ce que le filtre passe-haut (17) possède un fort gradient dans la plage de fréquences de 10 à 15 kHz.

9. Appareil de surveillance selon l'une quelconque des revendications 6 à 8, caractérisé en ce que le filtre passe-haut (17) est accordé en fonction de la plage de fréquences des fronts d'ondes des signaux induits dans les moyens transducteurs (16) par des impacts de grains de céréales sur la plaque détectrice des moyens détecteurs.

10. Appareil de surveillance selon l'une quelconque des revendications 6 à 9, caractérisé en ce que les moyens formant circuits (17-34) comportent :
- un comparateur (18) qui possède un dispositif à seuil (19) associé à lui; ledit comparateur (18) étant relié aux moyens transducteurs (16) par l'intermédiaire du filtre passe-haut (17) pour recevoir la sortie de ceux-ci; et
- un intégrateur (23) équipé d'un dispositif à commande de gain ajustable (24); la sortie de l'intégrateur (23) étant appliquée à des moyens indicateurs (25; 26).

11. Appareil de surveillance selon la revendication 10, caractérisé en ce que le dispositif à seuil (19) associé au comparateur (18) est ajustable.

12. Appareil de surveillance selon la revendication 10 ou 11, caractérisé en ce que :
- le filtre passe-haut (17) ainsi que le comparateur (18) et le dispositif à seuil (19) associé à celui-ci forment un circuit de conditionnement de signaux; ledit circuit de conditionnement de signaux étant disposé au voisinage immédiat des moyens transducteurs (16); et
- les moyens formant circuits (17-34) comportent également un second comparateur (21) auquel l'intégrateur (23) est relié et qui possède lui-aussi un dispositif à seuil (22) associé à lui; ledit second comparateur (21) et son dispositif à seuil (22) associé, ledit intégrateur (23), ledit dispositif à commande de gain (24) et lesdits moyens indicateurs (25; 26) formant ensemble un circuit indicateur disposé en un emplacement éloigné du circuit de conditionnement de signaux et relié à celui-ci par un long conducteur (20) pour en recevoir les signaux.

13. Appareil de surveillance selon l'une quelconque des revendications 10 à 12, caractérisé en ce que les moyens indicateurs (25; 26) comportent une batterie de diodes électroluminescentes (25); le nombre de diodes (25) excitées par la sortie de l'intégrateur (23) pouvant être ajusté par le dispositif à commande de gain ajustable (24) associé à l'intégrateur (23).

14. Appareil de surveillance selon l'une quelconque des revendications 10 à 13, caractérisé en ce que les moyens indicateurs (25, 26) comportent un compteur (26) dont l'aiguille est excitée par la sortie de l'intégrateur (23), la position de ladite aiguille pouvant être ajustée par le dispositif à commande de gain ajustable (24) associé à l'intégrateur (23).

15. Appareil de surveillance selon l'une quelconque des revendications 10 à 14, caractérisé en ce que le dispositif à commande de gain ajustable (24) associé à l'intégrateur (23) est le seul organe de contrôle qui doit être actionné par l'opérateur pour régler l'appareil de surveillance.

16. Appareil de surveillance selon l'une quelconque des revendications précédentes, caractérisé en ce que le rapport du taux de détection d'impacts de grains de céréales sur le taux de détection d'impacts de paille est supérieur à 4.

17. Appareil de surveillance selon l'une quelconque des revendications précédentes, caractérisé en ce qu'il comporte plusieurs canaux (14, 15); chaque canal (14, 15) possédant des moyens détecteurs et des moyens formant circuits (17-34).

18. Appareil de surveillance selon la revendication 17, lorsque celle-ci est directement ou indirectement dépendante de la revendication 12, caractérisé en ce qu'il est prévu :
- deux canaux (14, 15); une moyenne des signaux de sortie des intégrateurs (23) respectifs de ces deux canaux (14, 15) étant établie et la moyenne des signaux étant appliquée à un troisième comparateur (31) qui possède un dispositif à seuil (32) associé à lui; et
- des moyens formant alarme (34) excités à chaque fois que le signal de sortie provenant du troisième comparateur (31) est supérieur au seuil défini par le dispositif à seuil (32).
